# DEMANDE DE BREVET EUROPEEN

(11) **EP 1 908 564 A1**
(43) Date de publication de la demande: **09.04.2008**
(21) Numéro de dépôt: 06291621.8
(22) Date de dépôt: 19.10.2006
(51) Int. Cl.: B29B 17/02, C22B 1/14, F27B 1/20, F27D 3/00

(54) **Procédé de valorisation de penus usagés et produit obtenu à partir de ces pneus**

(30) Priorité: 02.10.2006 EP 06291541
(71) Demandeur: Fiday Gestion, 70360 Scey sur Saône (FR)
(72) Inventeur: Voniez, Jean-Michel, 70360 Scey-sur-Saône (FR); Garnier, Jean-Pierre, 70190 Pennesières (FR)
(74) Mandataire: Berger, Helmut

(57) **Abrégé**

L'invention concerne un procédé de valorisation de pneus usagés, contenant du fil en acier et qui ont été transformés par des opérations de broyage en un broyat comportant des morceaux de fil d'acier et un granulat de caoutchouc qui est essentiellement caractérisé en ce que le broyat est transformé en portion de broyat compacté (20), utilisable comme mini-charges pour des installations de fusion de métaux (1), tels que des cubilots ou des fours d'aciérie.

## Description

L'invention concerne un procédé de valorisation de pneus usagés, contenant du fil en acier et qui ont été transformés par des opérations de broyage en un broyat comportant des morceaux de fil d'acier avec un résidu de caoutchouc et un produit obtenu à partir de ces pneus.

Il est connu que les pneus usagés posent un problème environnemental et, depuis l'année 2002 en France, il est obligatoire de les valoriser au lieu de les mettre en décharge. A titre d'indication pour bien voir le problème occasionné par les pneus usagés, la quantité générée annuellement est de 400 000 tonnes en France et d'environ 3 500 000 tonnes dans l'Union Européenne.

Au cours de la valorisation, les pneus usagés sont découpés et broyés puis leurs constituants séparés. On obtient alors en majorité des granulats de caoutchouc, 20 % en moyenne de morceaux de fils d'acier qui étaient contenus dans le pneu et du tissu. Actuellement on utilise pour des applications multiples, par exemple pour des revêtements de sol sportifs, des granulats de caoutchouc. Des équipements de broyage sont conçus pour récupérer au mieux ces granulats dont la valeur marchande est comprise entre 120 et 250 Euros par tonne suivant la finesse de la granulométrie.

Par contre, le fil d'acier très fin récupéré à l'issue des opérations de broyage et de séparation présente en générale cinq caractéristiques qui font que sa valeur marchande est très faible, entre 0 et 20 Euros par tonne départ usine à cause de la teneur en caoutchouc en général trop élevée de 20 à 60 %, sa densité apparente trop faible avec un aspect volumineux, l'enchevêtrement des fils, son élasticité due à l'acier et au résidu de caoutchouc résiduel, ainsi que sa morphologie différente selon la provenance, à savoir des fils coupés plus ou moins longs. Par conséquent cette matière n'a jusqu'à présent pas trouvé d'application majeure malgré son faible coût.

L'invention a pour but de pallier cet inconvénient.

Pour atteindre ce but, le procédé selon l'invention comporte les caractéristiques qui sont énoncées dans la partie caractérisante de la revendication 1.

Le produit de mise en oeuvre du procédé comporte à cette fin les caractéristiques de la revendication 9.

D'autres caractéristiques de l'invention font des objets de revendications dépendantes.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention et dans lesquels :
- la figure 1 est une vue schématique synoptique d'une installation de fusion comportant un cubilot ;
- la figure 2 est une vue à plus grande échelle du cubilot selon la figure 1 à l'état chargé de ferraille et de mini-charges selon l'invention, en forme de boîtes remplies de broyats compactés ;
- les figures 3 à 8 sont des vues schématiques illustrant plusieurs étapes successives d'un premier mode de réalisation de la mise en boîte du broyat, selon l'invention ;
- la figure 9 est une vue de dessus d'une boîte de mini-charges selon l'invention, avec retenue du broyat compacté, par deux fils en acier qui se croisent ;
- les figures 10 à 12 sont des vues schématiques illustrant plusieurs étapes successives d'un second mode de réalisation de la mise en boîte du broyat, selon l'invention ;
- la figure 13 est une vue en perspective illustrant une partie d'une aiguille de mise en place des fils de retenue du broyat, conformément à la figure 12 ;
- la figure 14 est une vue en coupe selon la ligne XIV-XIV de la figure 13 ;
- la figure 15 est une vue en coupe du dispositif de ligature d'une boîte de mini-charges selon l'invention ;
- les figures 16 à 20 sont des vues schématiques illustrant plusieurs étapes successives d'un troisième mode de réalisation de la mise en boîte du broyat, selon l'invention.

L'invention sera décrite ci-après dans son application à un cubilot à vent chaud, sans que cette application soit limitative. En effet, le procédé de l'invention est utilisable pour tout autre installation de fusion de métal, tel que par exemple des fours d'aciérie au gaz ou électriques et des cubilots à vent froid.

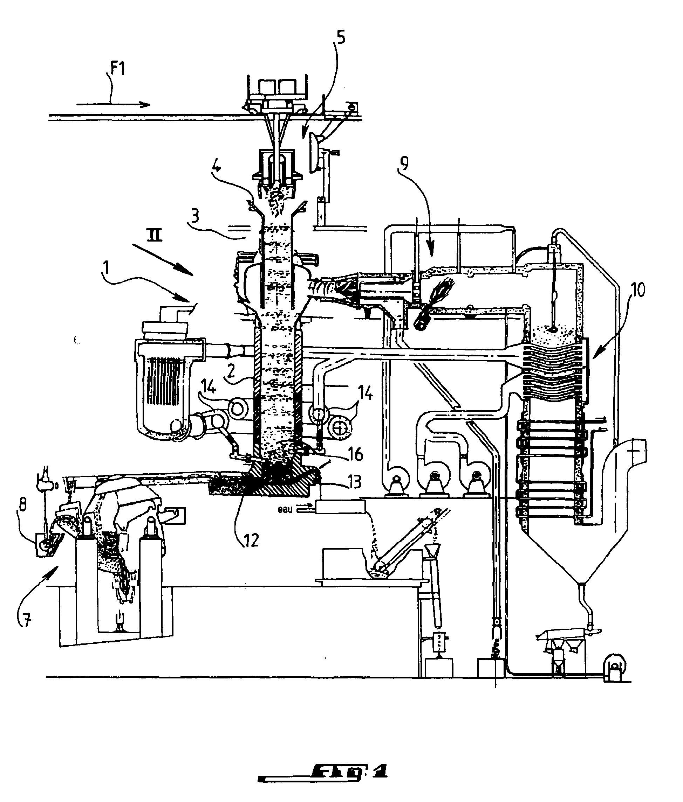

Sur la figure 1, la référence 1 désigne un cubilot comprenant un corps principal 2 et une partie supérieure 3 avec, en haut, le gueulard 4 du cubilot, la référence 5 deux bennes de chargement, la référence 7 un four de maintien de la fonte par exemple à une température de 1 450° et pourvu d'une poche de coulée 8, 9 un système de postcombustion des gaz et des fumées produites par le cubilot et 10 un échangeur de chaleur air- fumée en aval du système de postcombustion.

Concernant le cubilot 1, le corps principal 2 du cubilot est un fût métallique par exemple d'environ deux mètres de diamètre et 15 mètres de hauteur, garni de réfractaire à l'intérieur et refroidi par de l'eau à l'extérieur. Au gueulard 4 du cubilot sont vidées les charges métalliques contenant ferrailles, fonte de récupération, coke, ferroalliages, fondant, préalablement dosés et pesés grâce à des trémies doseuses et les deux bennes de chargement 5. La flèche F1 symbolise l'amenée des charges.

Les charges sont disposées en couches à l'intérieur du cubilot. A titre d'exemple, environ quinze charges de 1, 5 tonnes peuvent être empilées dans le fût du cubilot.

En pied du cubilot, on constate en 12 la sortie de la fonte liquide qui s'écoule en continu si bien que les charges métalliques solides descendent petit à petit dans le fût du cubilot et sont remplacées par l'apport de nouvelles charges au gueulard. Au dessus de la fonte liquide surnage le laitier 13 qui contient les impuretés des charges et est évacuée par un trou 13.

Le cubilot comporte des tuyères 14 qui sont destinées à injecter de l'oxygène pour brûler le coke et élever la température vers 2 000°C des charges à fondre dans la zone 16. Cet oxygène provient essentiellement de l'air qui est réchauffé par les fumées dans l'échangeur 10, et qui est appelé vent chaud. Ces fumées chaudes sont produites par la combustion du monoxyde de carbone dans la chambre de post-combustion 9, lui-même provenant de la réaction chimique entre le dioxyde de carbone et coke dans le fut du cubilot.

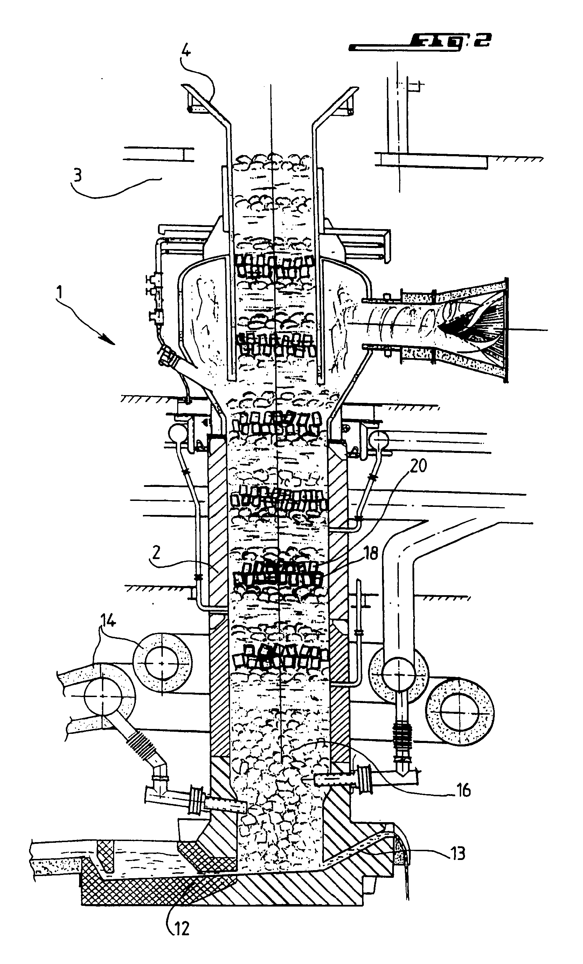

La figure 2 montre à plus grande échelle le cubilot et ses charges réalisées conformément à l'invention.

La figure 2 illustre, plus en détail, en 18 les couches de charges de la matière de ferraille dans le cubilot. On constate qu'une partie de la ferraille utilisée classiquement est remplacée par des boîtes 20 qui constituent des mini charges de broyat comportant un mélange de morceaux de fil d'acier et de caoutchouc, à l'état compacté. Plus précisément, le broyat comporte des morceaux de fil d'acier issus des opérations de broyage de pneus usagés contenant 40 à 90 % de fil en acier, le reste étant des morceaux de caoutchouc résiduels et, éventuellement, des tissus résiduels.

Dans le cadre du procédé selon l'invention, au moins 50 % des charges en ferraille classique du cubilot peuvent être remplacées par les mini charges de fil en boîte, si la teneur résiduelle en caoutchouc ne dépasse pas 10 à 15 % du poids de la matière brute mise en boîte. Si la teneur en caoutchouc est supérieure à 15 %, pour éviter que les émissions de gaz et des poussières soient trop importantes, trois solutions sont possibles qui consistent soit à réduire la quantité des boîtes dans la charge, soit à pratiquer une purification sur le fil brut avant sa mise en boîte, ou encore adapter le circuit de post-combustion et de traitement des gaz à la quantité supplémentaire de gaz issu de la combustion et de la pyrolyse du caoutchouc résiduel. Pour effectuer cette purification, on peut utiliser des dispositifs disponibles, tels que des broyeurs à marteaux ou broyeurs à couteau, des presses à granuler à filière plate, par exemple. Le traitement permet de broyer finement le caoutchouc, mais aussi de découper les fils d'acier dans des dimensions voisines de 0,5 à 2 centimètres. Le fil d'acier est ensuite séparé des résidus de caoutchouc par des systèmes de séparation magnétiques. Les granulats de caoutchouc récupérés par cette opération de purification pourront alors être valorisés séparément.

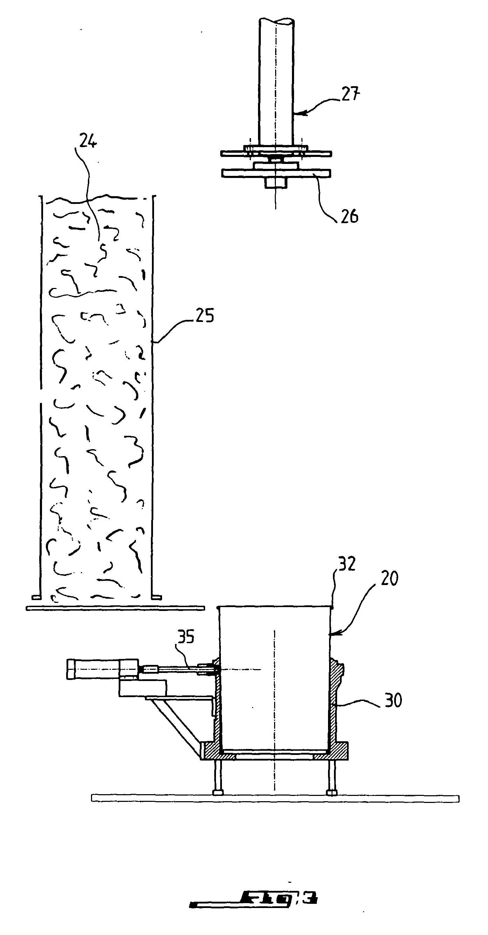

Les figures 3 à 8 illustrent un premier mode de réalisation de la mise en boîte du broyat, selon l'invention.

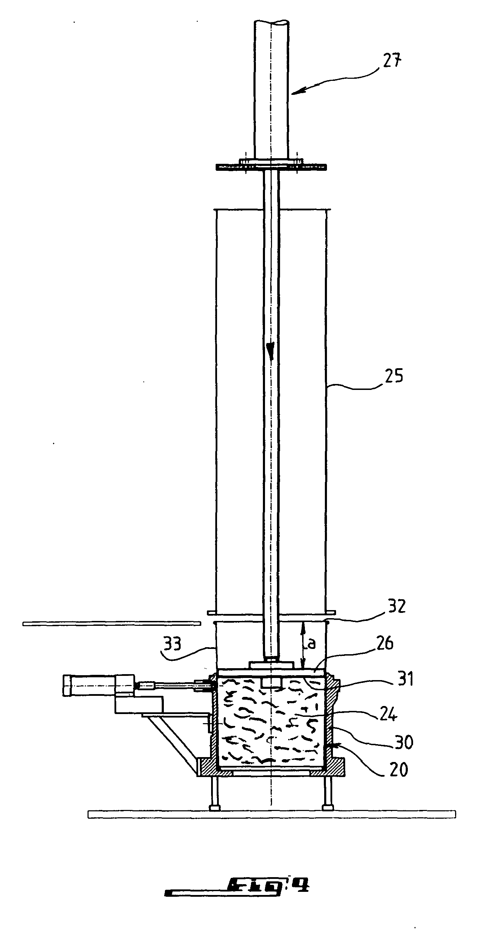

Comme on le voit sur la figure 3, dans une première opération, du broyat 24 tel que décrit plus haut, est rempli dans un tube de prédosage 25 avant d'être introduit et compacté à l'aide d'un piston de compactage 26 d'un vérin 27 dans une boîte métallique 20 montée et maintenue dans un dispositif de support 30. La figure 4 montre l'étape suivante, à la fin de laquelle le broyat 24 est rempli et compacté dans la boîte 20. A cette fin, le tube de prédosage 25 a été positionné au-dessus de la boîte et le piston de compactage 26 en descendant dans le tube 25 a repoussé le broyat dans la boîte et l'a compacté dans celui-ci. Le broyat remplit la boîte jusqu'à un niveau prédéterminé, à une certaine distance du bord supérieur 32 de la boîte. La partie de la boîte porte la référence 33.

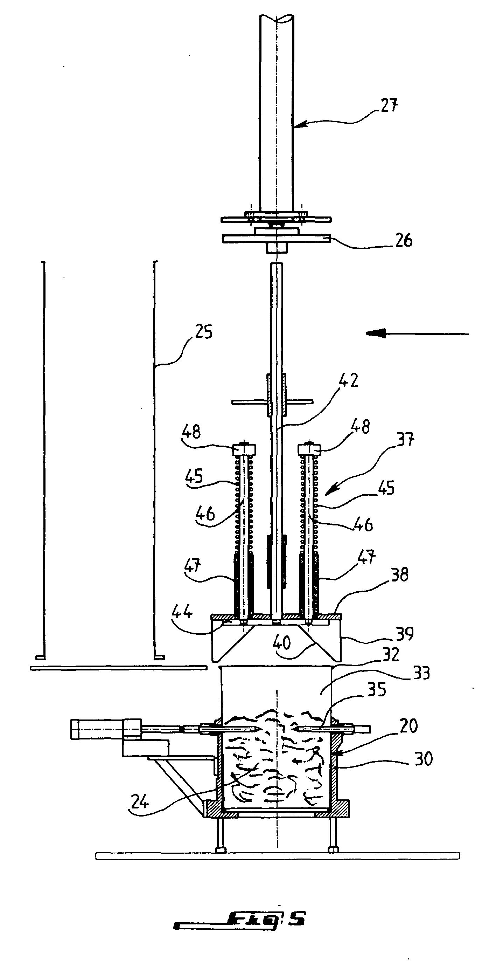

Ensuite, pour assurer le maintien à l'état compacté du broyat 24 dans la boîte, et de permettre au piston de compactage de remonter, plusieurs broches 35 sont amenées à traverser la paroi de la boîte 20, radialement dans le plan du niveau supérieur 31 du broyat. La figure 5 montre les broches 35 qui maintiennent maintenant le broyat, à l'état compacté, à l'intérieur de la boîte, le piston de compactage 26 étant revenu dans sa position de départ comme l'avait fait plus tôt le tube de dosage 25.

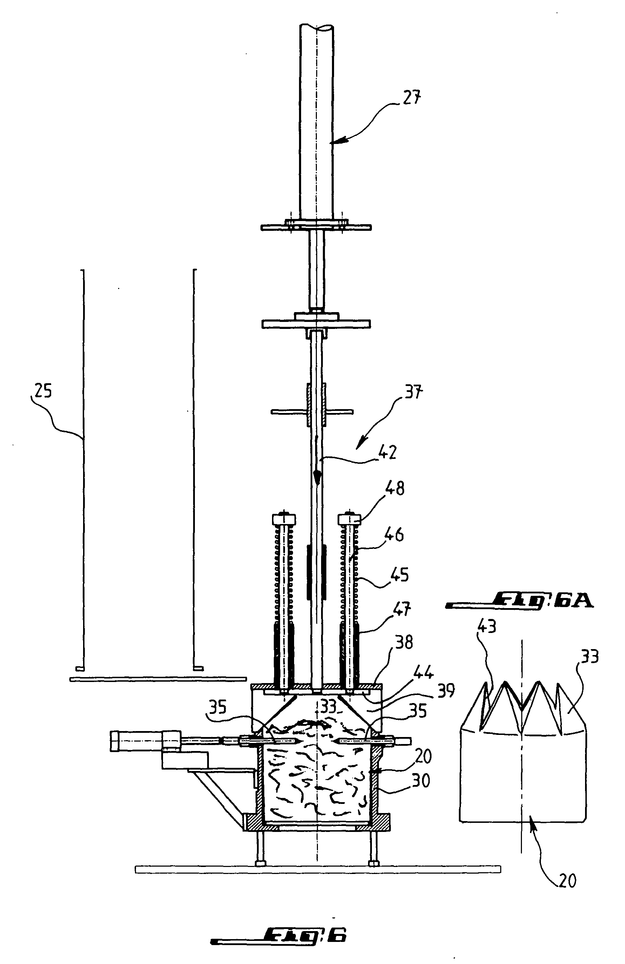

Au-dessus de la boîte est maintenant positionné un dispositif 37 de fermeture de la boîte, qui a été amené par un mouvement indiqué par la flèche. Ce dispositif 37 comporte à son extrémité inférieure une plaque de base circulaire 38 portant sur sa face inférieure, en regard de la boîte, une pluralité de lames de pliage triangulaire 39, régulièrement réparties autour de sa périphérie, qui s'étendent perpendiculairement en direction du bord supérieur de la boîte et dont les arêtes 40 tournées vers ce dernier sont inclinées pour déformer la partie supérieure libre 33 de la boîte lorsque le dispositif de fermeture 37 avec sa plaque 38 est abaissée comme le montre la figure 6, sous l'effet du piston de compactage 26 qui agit sur l'extrémité supérieure d'une tige 42 dont l'extrémité inférieure est solidarisée de la plaque 38. Les lames de pliage 39 provoquent alors des plis montrés en 43 dans le bord 32 libre de la boîte en poussant celui-ci vers l'axe comme le montre la figure 6A. La partie supérieure 33 de la boîte est alors inclinée en direction de l'axe. Les broches 35 sont retirées.

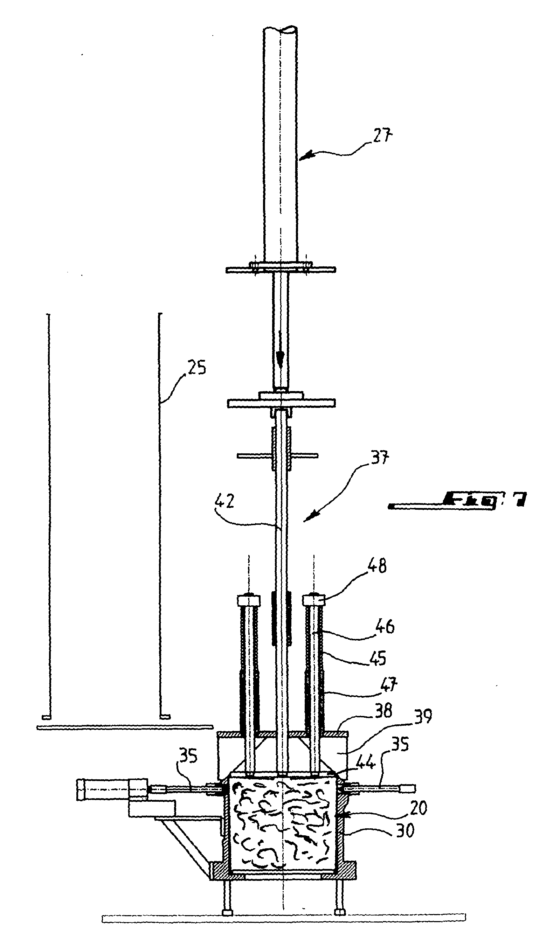

A l'étape suivante illustrée par la figure 7, le dispositif de fermeture 37 repousse cette partie inclinée 33 sur le broyat compacté en agissant sur l'extrémité de la tige 42 qui est maintenant désolidarisée de la plaque de base 38, traverse celle-ci et entraîne une plaque de poussée 44 normalement disposée sous la plaque de base, vers le bas pour exercer la pression de fermeture sur la partie de paroi supérieure 33 de la boîte, déjà inclinée. Il est à noter que la plaque de poussée 44 porte des fentes radiales lui permettant de coulisser. Le déplacement de la plaque 44, qui provoque la fermeture de la boîte se fait à l'encontre de ressorts de rappel hélicoïdaux 45, qui entourent des tiges 46 implantées sur la plaque de poussée 44 et traversent la plaque de base 38. Les ressorts 45 prennent appui par une extrémité sur cette plaque, par l'intermédiaire de douilles 47 et à leurs autres extrémités sur des écrous 48 vissés sur les extrémités supérieures des tiges.

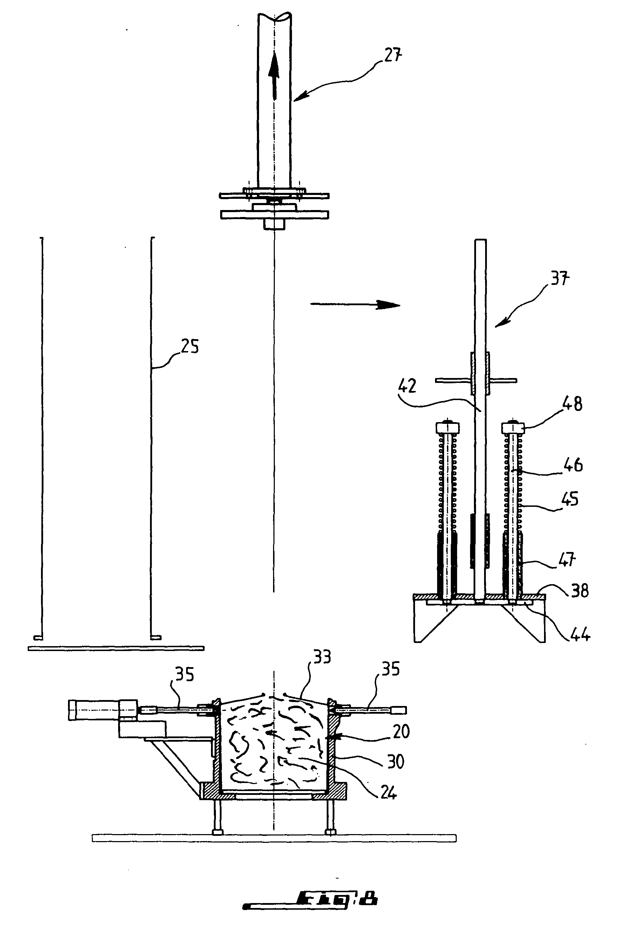

Comme on le voit sur la figure 8, à la fin de l'opération de fermeture de la boîte, la partie de paroi supérieure 33 de celle-ci est repliée sur le broyat compacté 24 en le maintenant dans la boîte pour éviter toute détente élastique de ce broyat. Le dispositif de fermeture 32 revient dans sa position de départ.

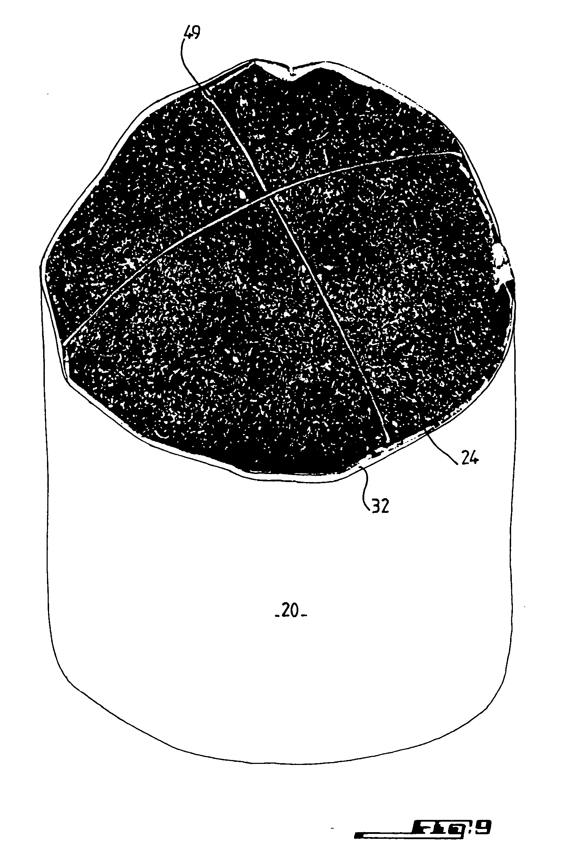

Les figures 9 à 12 présentent un autre mode de réalisation de la mise en boîte du broyat 24. Ce deuxième mode de mise en boîte consiste à ligaturer le dessus de la boîte seau en passant des fils d'acier croisés au dessus du broyat et de replier les extrémités des fils sur le bord 32. L'énergie fournie par l'élasticité des broyats permet de tendre le fil.

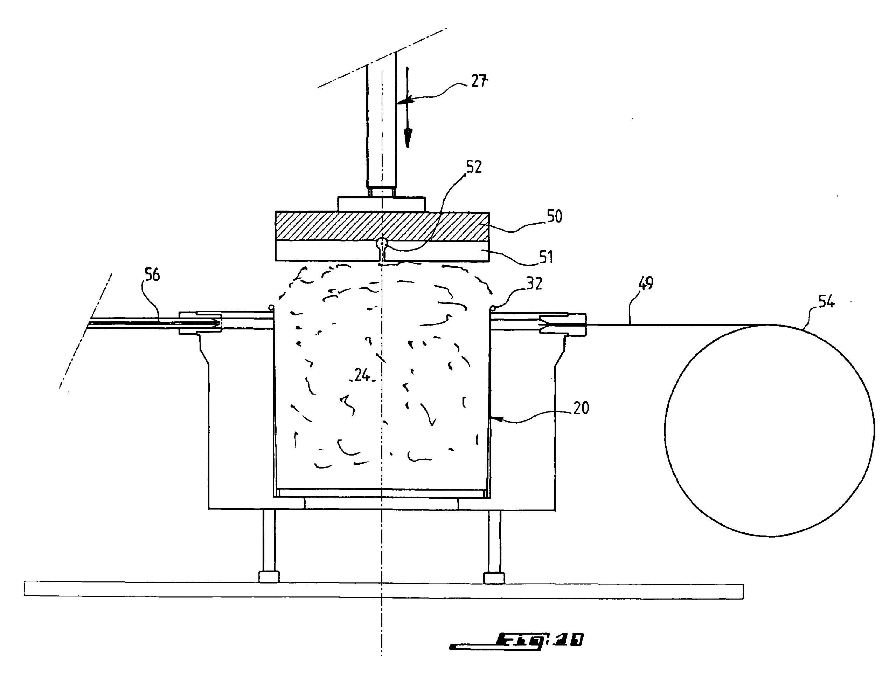

La figure 9 montre une boîte de mini-charges 20, remplie de broyats compactés et retenus par les deux fils croisés 49. Les figures 10 à 12 illustrent trois étapes significatives du procédé de la mise en boîte.

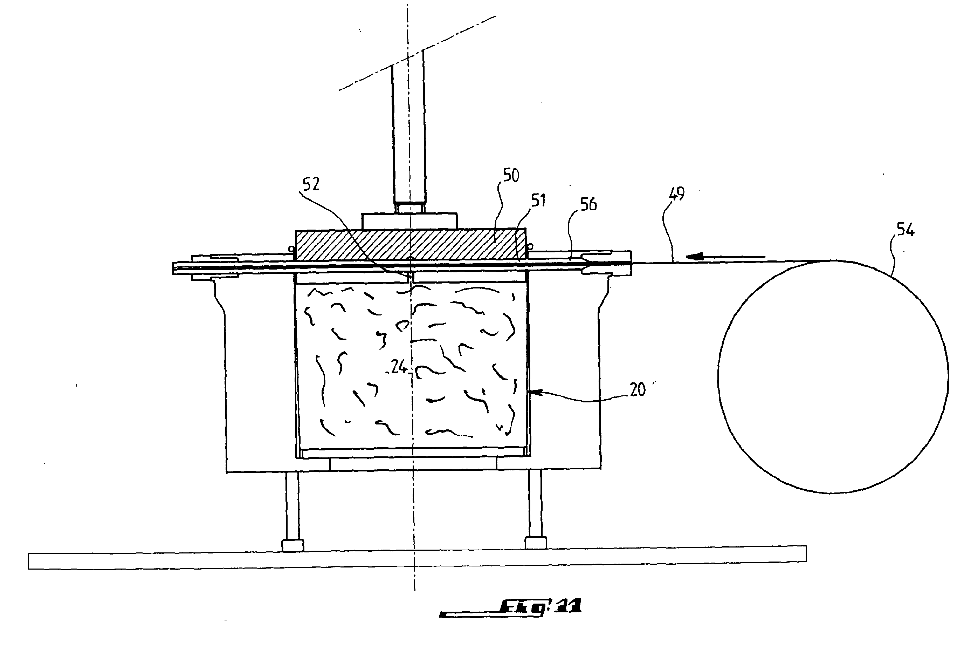

La figure 10 montre le broyat en train d'être compacté dans la boîte 20 à l'aide d'un piston circulaire de compactage 50 d'un vérin de compactage qui est, dans l'exemple représenté, le vérin 27 de la figure 3. Le piston 50 présente la particularité que sa face inférieure comporte deux rainures perpendiculaires 51, 52 qui s'étendent diamétralement sur toute l'étendue du piston. Les rainures 51 et 52 sont prévues pour permettre chacune le passage d'un fil 49 comme cela ressort de la figure 11, lorsque le piston 30 est dans sa position de compactage finale. Chacun des deux fils 49 est déroulé d'une bobine 54. Pour qu'un fil puisse passer, le dispositif de support de la boîte comporte, associé à chaque rainure 51 ou 52 une aiguille passe fil 56 qui est amenée à passer par la rainure correspondante, au dessus du broyat en appui contre la face inférieure du piston, comme on le voit sur la figure 11.

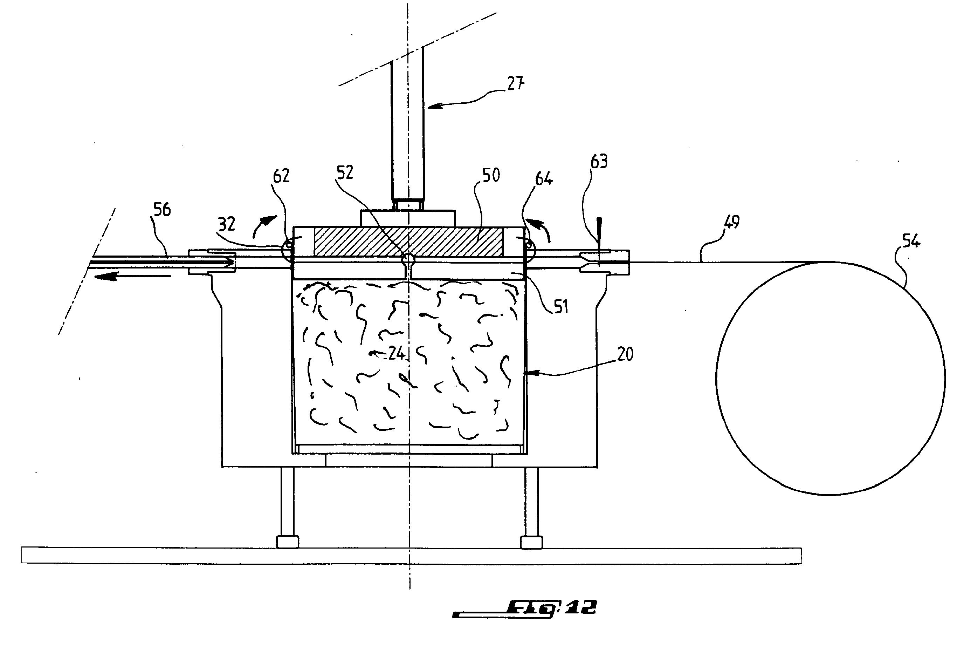

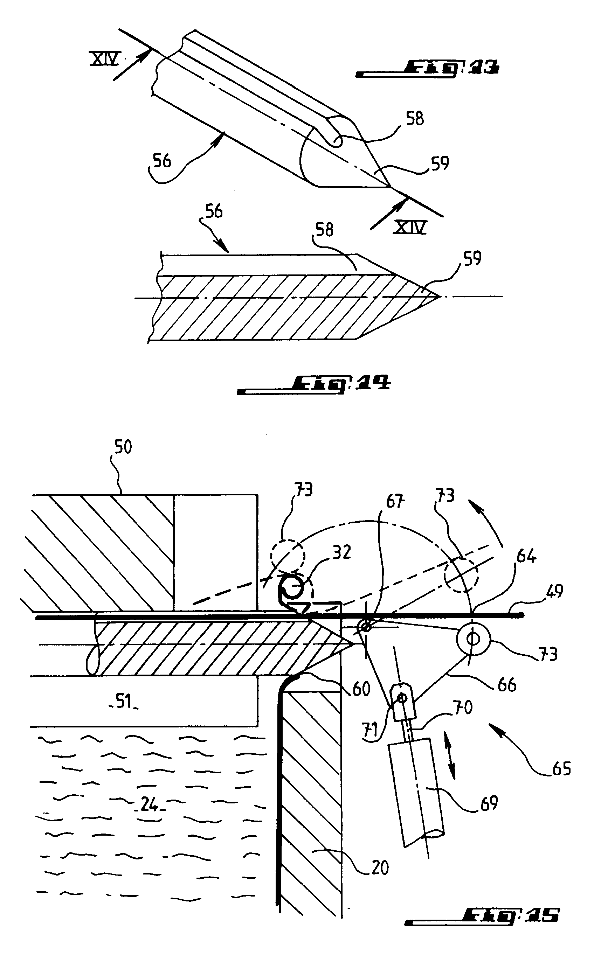

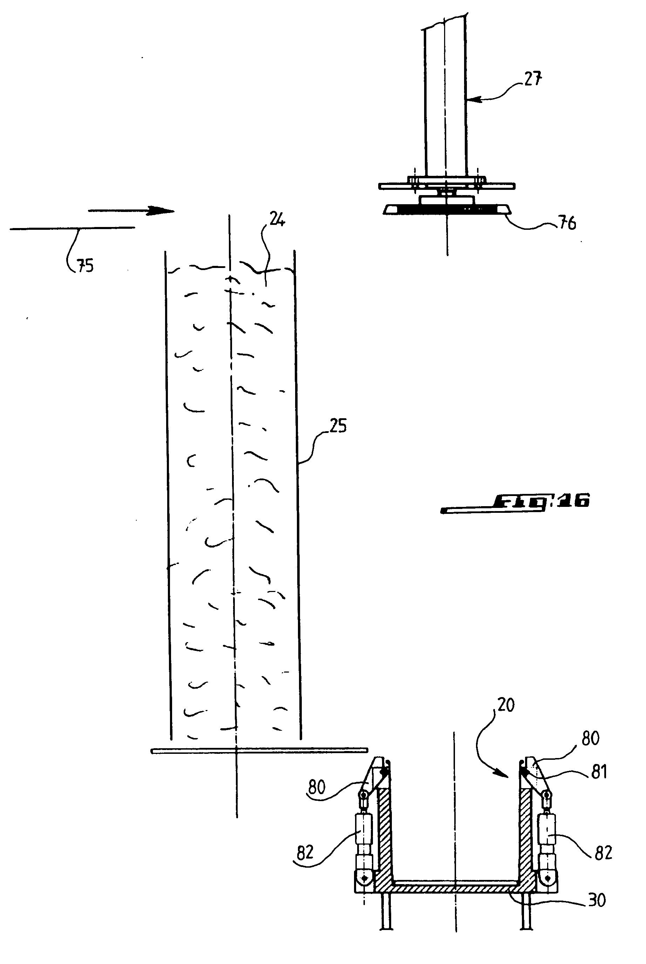

Comme il ressort des figures 13 et 14, l'aiguille 56 comporte dans sa surface périphérique une rainure de passe fil 58, qui s'étend sur toute la longueur de l'aiguille si bien que le fil 49 se déroulant de la bobine 54 puisse traverser la boîte en passant par la rainure passe fil 58. Il est à noter que l'aiguille, grâce à sa pointe 59, a auparavant percé en 60 la paroi de la boîte 20, juste en dessous du bord supérieur 32 de cette dernière.

Après que le fil 49 ait traversé la boîte, en étant guidé dans la rainure passe fil de l'aiguille, cette dernière revient dans sa position de départ hors de la boîte, conformément à la figure 12. L'extrémité libre 62 du fil 49 est alors repliée sur le bord 32 de la boîte. Du côté de la bobine 54, le fil est coupé en 63 et son extrémité 64 est également repliée sur le bord 32 de la boîte. Ces opérations sont montrées sur la figure 12.

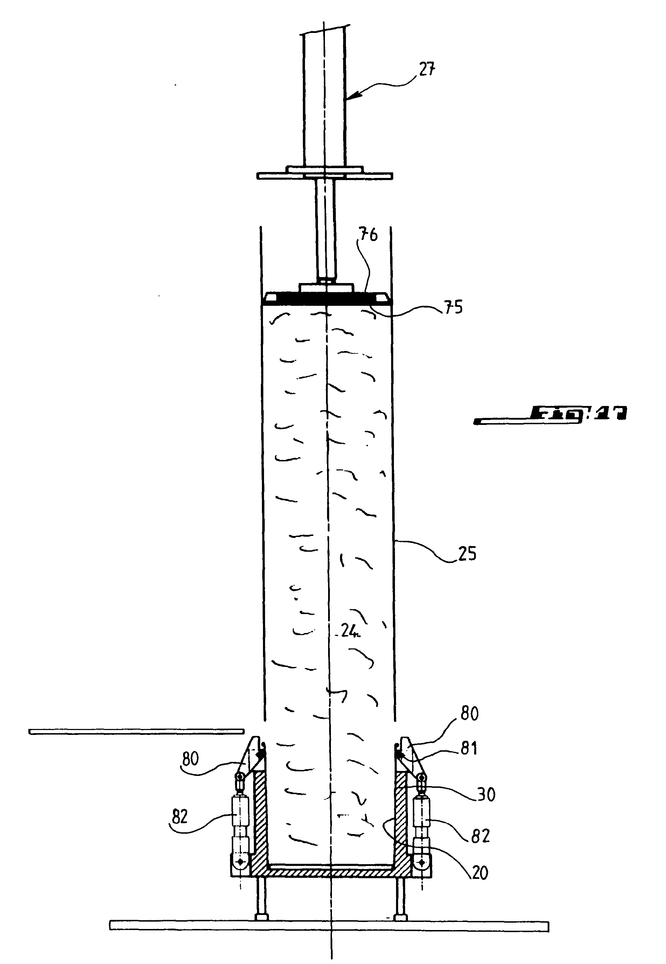

La figure 15 illustre plus en détail le passage du fil 49 et le repliage du fil après sa traversée de la boîte. Le dispositif de repliage 65 comporte une plaque triangulaire 66 montée pivotante autour d'un axe 67 au niveau d'un de ses angles, sous l'effet d'un vérin 69 dont la tige 70 est articulée à un autre angle, en 71, tandis que le troisième angle situé en dessous du fil 49 comporte un galet 73.

Pour replier l'extrémité 64 du fil 49 sur le bord de la boîte, le vérin 69 fait pivoter la plaque triangulaire 66 autour de son axe 67 en direction de la flèche, si bien que le galet 73 puisse replier l'extrémité de fil 64 sur le bord 32, de la manière représentée. Bien entendu le repliage de l'autre extrémité de fil 62 se fait de la même manière.

Après la mise en place des fils 49, ligaturant le dessus de la boîte, le piston de compactage 50 remonte vers sa position de départ et les broyats vont venir tendre les fils 49 sur les bords 32 de la boîte.

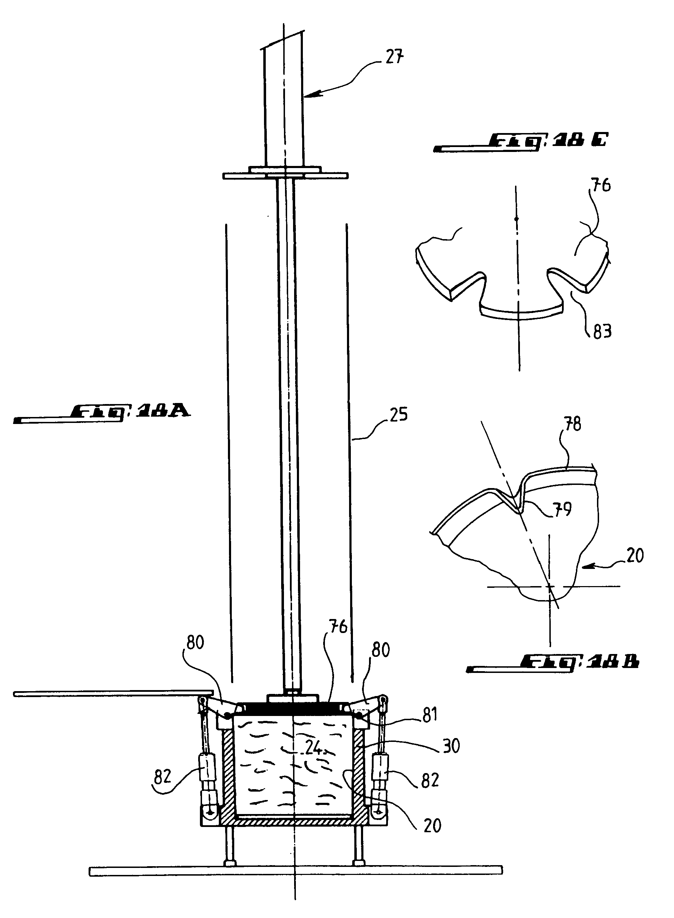

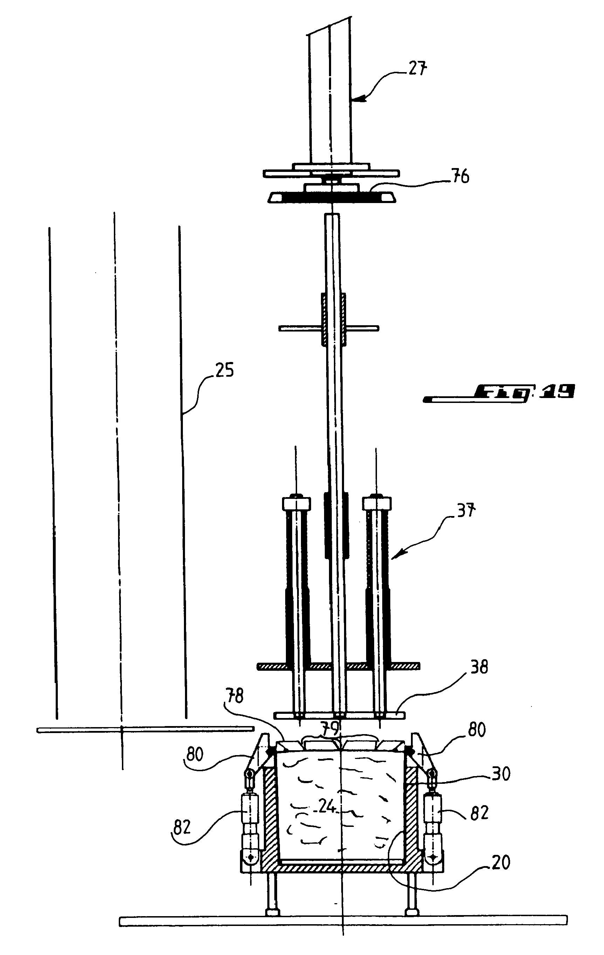

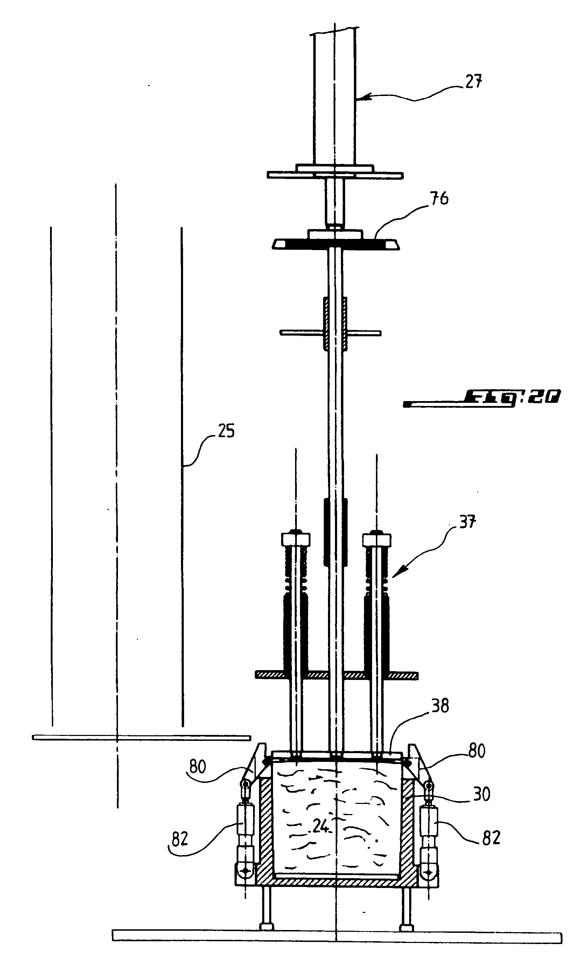

En se référant aux figures 16 à 20 on décrira ci-après encore un autre mode de réalisation de la mise en boîte du broyat, selon l'invention.

Ce procédé consiste essentiellement, par rapport au mode de réalisation selon les figures 3 à 6, à ajouter un couvercle ou disque métallique 75 au dessus du broyat 24 contenu dans le tube de pré-dosage 25. Comme on le voit sur la figure 17, le piston 76 qui remplace le piston de compactage 26, entraîné par le vérin 27 pousse le broyat et le disque 75 dans le tube de pré-dosage puis le comprime dans la boîte comme le montre la figure 18A. Puis le bord 78 de la boîte 20 est replié, comme on le voit en 79 sur la figure 18 à plusieurs emplacements du bord, par une pluralité appropriée de lames 80 réparties sur le pourtour du bord. Chacune des lames 80 avantageusement au nombre d'au moins six, est réalisée sous forme d'un levier à deux bras, monté pivotant autour d'un axe 81 sur le dispositif de support 30, au niveau du bord 78, sous l'effet d'un vérin 82 dont le corps est articulé au support 30 et l'extrémité de la tige de piston est articulé au bras de commande de la lame 80, l'autre bras assurant la déformation du bord 78 de la boîte. A cette fin, les lames peuvent passer au travers de découpes 83 à la périphérie du piston 76, comme l'illustre la figure 18C. Les pliages au bord 78 de la boîte 20 dont il est avantageux de prévoir au moins six retiennent alors le disque métallique 75 et le broyat 24 comprimé en dessous. Le vérin 27 et le piston 76 sont alors retirés et remplacés par le système de sertissage finale 37 selon la figure 5, qui ne présente cependant plus les lames de pliage triangulaire 39. Le piston 38 du système de sertissage vient alors s'appuyer sur le dessus de la boîte et finalise le rabat du rebord de celle-ci. La figure 20 illustre la situation à la fin de cette opération.

L'avantage du mode de la mise en boîte selon les figures 16 à 20 est qu'elle permet de mieux remplir la boîte du broyat car le rabat est moins important que dans le premier mode de la mise en boîte et le dispositif permet une meilleure protection des matières compactées.

Comme il a été explicité plus haut, les boîtes remplies de broyats compactés sont alors prêts pour être introduites comme mini-charges dans le cubilot ou tout autre installation de fusion appropriée. La dimension des boîtes est choisie en fonction du diamètre du cubilot ou du four de fusion de manière à optimiser les coûts de production de ses boîtes et leur utilisation. A titre d'exemple, un diamètre ou une longueur de boîte supérieure à 100 mm et inférieure à un tiers du diamètre au nez des tuyères situées sans le cubilot est souhaitable.

Il ressort de la description qui vient d'être faite, que l'invention permet d'utiliser des broyats de pneus usagés, qui n'ont pas trouvé, jusqu'à présent, une application et ont été considérés comme étant inutilisables économiquement.

L'utilisation économiquement très avantageuse des broyats est possible, conformément à l'invention, du fait que ce broyat est compacté dans des boîtes métalliques pour constituer ainsi des mini-charges destinées à être enfournées dans un cubilot ou tout autre moyen de fusion, comme de la ferraille classique.

Parmi les avantages que procure l'invention, on notera notamment le compactage du fil pneu, ce qui est important pour maintenir la capacité horaire de l'équipement de fusion, l'emprisonnement du fil dans la boîte, ce qui facilite sa manutention, évite les perturbations liées à du métal en vrac dans le cubilot et permet aux matières contenues dans la boîte de descendre au fond du cubilot avant leur fusion. En particulier, les fils fins d'acier sont protégés d'une oxydation précoce grâce à la boîte qui les entoure, et il en est de même pour le caoutchouc résiduel qui est protégé d'une combustion au profit d'une pyrolyse. Ceci permet d'obtenir un meilleur rendement à la fois pour l'acier du fil, mais aussi pour le caoutchouc résiduel qui remplace alors une partie du coke du fait de sa pyrolyse. Enfin, l'invention procure un renforcement de la résistance à l'écrasement des charges dans le cubilot, ce qui permet de maintenir une porosité suffisante pour l'évacuation des gaz, ainsi qu'un bon fonctionnement du cubilot.

Mais l'invention apporte un autre avantage grâce à l'utilisation de mini-charges dans des boites métalliques.

Dans un cubilot sont en général chargées les matières qui vont permettre de réaliser une fonte ayant la bonne température, mais aussi les bonnes analyses chimiques, comme la teneur en éléments tels que le carbone, le silicium, le manganèse, le chrome...

Ces éléments sont chargés au gueulard du cubilot et empilés dans le fût du cubilot, la fusion du métal et la production de fonte se faisant en continu dans le creuset au bas du cubilot. Ces éléments chargés doivent avoir des tailles adaptées au diamètre du cubilot. Si en effet, ces éléments sont trop petits en dimension ou trop friables, il peut y avoir des écrasements des charges qui vont conduire à des accidents lors de l'opération de fusion. Si par contre, la taille des éléments est trop importante relativement au diamètre du cubilot, il va y avoir des accrochages le long du fût et aux tuyères, un mauvais mélange des différents constituants, ce qui perturbe le fonctionnement du cubilot. Les éléments achetés doivent présenter une dimension ou granulométrie adaptée, ce qui conduit à un surcoût lié à cette agglomération. C'est la cas pour les briquettes de copeaux d'usinage trop petits pour être utilisés en vrac, pour les ferroalliages ajoutés au cubilot, tels que ferrosilicium, ferromanganèse, ferrochrome..., pour le coke aussi...

L'utilisation de boîtes permet le chargement partiel de matières moins onéreuses car non agglomérées comme le poussier de coke ou d'anthracite à la place du coke, de ferroalliages en vrac et non compactés, de matières ferreuses fines comme les molures, limaille de fer, boues de rectification, ou le fil pneu, de poussières contenant des oxydes de fer, des déchets valorisables, du minerai de fer pré réduit, etc... Ces matières fines sont moins coûteuses que des matières équivalentes agglomérées, et leur emprisonnement dans la boîte les protège d'une oxydation préalable jusqu'à la zone où se produit la fusion. Les pertes au feu sont ainsi diminuées et leur rendement amélioré.

La dimension des boîtes est choisie en fonction du diamètre du cubilot ou du four de fusion, de manière à optimiser les coûts de production de ces boîtes et faire en sorte que leur utilisation soit adaptée à la taille de l'installation.

## Revendications

1. Procédé de valorisation de pneus usagés, contenant du fil en acier et qui ont été transformés par des opérations de broyage en un broyat comportant des morceaux de fil d'acier et un résidu de caoutchouc, **caractérisé en ce que** ce broyat est transformé en portion de broyat compacté (24), utilisable comme mini-charges pour des installations de fusion de métaux (1), tels que des cubilots ou des fours d'aciérie.

2. Procédé selon la revendication 1, **caractérisé en ce que** les mini-charges précitées remplacent au minimum 50 % des charges en ferrailles d'un cubilot (1), si la teneur résiduelle du broyat ne dépasse pas 10 à 15 % du poids de la matière brute du broyat.

3. Procédé selon la revendication 1, **caractérisé en ce que**, lorsque la valeur en caoutchouc est supérieure à une valeur prédéterminée maximale dépendent du type de l'installation, le broyat est soumis à une opération de purification.

4. Procédé selon l'une des revendications 1 à 3, **caractérisé en ce que** le broyat (24) est introduit et compacté dans des boîtes métalliques (20) et retenu à l'intérieur de ces boîtes, à l'état compacté, ces boîtes constituant alors les mini-charges précitées.

5. Procédé selon la revendication 4, **caractérisé en ce que** le maintien du broyat (24) dans les boîtes de mini-charge (20) est assuré par repliage des parois de la partie supérieure (33) non remplie de broyats (24) sur le broyat compacté.

6. Procédé selon la revendication 4, **caractérisé en ce que** le broyat (24) est maintenu à l'état compacté dans les boîtes de mini-charges (20) en ligaturant les boîtes après le remplissage et le compactage du broyat par des fils (49) passant au dessus du broyat.

7. Procédé selon l'une des revendications 4 à 6, **caractérisé en ce que** les boîtes (24) remplies de broyats compactés présentent avantageusement un diamètre ou une longueur supérieures à 100 mm et inférieures au tiers du diamètre au nez des tuyères du cubilot dans lequel elles sont enfournées.

8. Procédé selon l'une des revendications 4 à 7, **caractérisé en ce que** les autres matières de charges sont également enfermées dans des boîtes, et sont en forme de matières fines non agglomérées et moins coûteuses.

9. Produit obtenu à partir de pneus usagés, contenant du fil en acier et qui ont été transformés par des opérations de broyage en un broyat comportant des morceaux de fil d'acier et un résidu de caoutchouc, **caractérisé en ce qu'**il est en forme de portions de broyat compacté (24), utilisable comme mini-charges pour des installations de fusion de métaux (1), tels que des cubilots ou des fours d'aciérie.

10. Produit selon la revendication 9, **caractérisé en ce qu'**une portion de mini-charges est formée par une boîte (20) en métal contenant du broyat compacté (24) et munis de moyens de maintien du broyat à l'état compacté.

11. Produit selon la revendication 10, **caractérisée en ce que** les moyens de maintien du broyat (24) à l'état compacté dans la boîte métallique (20) est formée par la partie de paroi supérieure (33) de la boîte (20), qui est repliée sur le broyat (24).

12. Produit selon la revendication 10, **caractérisée en ce que** les moyens de maintien du broyat (24) à l'état compacté dans la boîte métallique (20) est formée par des fils (49) ligaturant la boîte (20) se fait par un couvercle métallique retenu par un sertissage du bord de la boîte.

13. Produit selon la revendication 10, **caractérisée en ce que** les moyens de maintien du broyat à l'état compacté dans la boîte métallique (20) est formé par des fils (49) ligaturant la boîte (20) au niveau de son bord supérieur (32).

14. Produit selon l'une des revendications 9 à 13, **caractérisé en ce que** la boîte (20) constitue un moyen de protection des matières fines contre l'oxydation jusqu'à leur fusion.
